# EUROPÄISCHE PATENTSCHRIFT

(11) **EP 2 479 458 B1**
(45) Veröffentlichungstag und Bekanntmachung des Hinweises auf die Patenterteilung: **29.05.2013**
(21) Anmeldenummer: 11000448.8
(22) Anmeldetag: 20.01.2011
(51) Int. Cl.: F16H 57/033

(54) **Modular aufgebautes Planetengetriebe**
Modular planetary gear
Engrenage épicycloïdal modulaire

(43) Veröffentlichungstag der Anmeldung: 25.07.2012
(73) Patentinhaber: Maxon Motor AG, 6072 Sachseln (CH)
(72) Erfinder: Westholt, Stefan, 79350 Sexau (DE); Kretzschmar, Uwe, 77933 Lahr (DE); Lukic, Darko, 79108 Freiburg (DE); Horn, Carsten, 77955 Ettenheim (DE)
(74) Vertreter: Grünecker, Kinkeldey, Stockmair & Schwanhäusser

(56) Entgegenhaltungen:
- DE-A1- 10 129 418
- DE-A1- 10 251 499
- DE-A1-102008 058 098
- DE-U1-202007 003 419
- US-A- 5 509 865
- US-A1- 2009 176 615

## Beschreibung

Die Erfindung betrifft ein modular aufgebautes Planetengetriebe nach dem Oberbegriff des unabhängigen Anspruchs 1. Ein derartiges Planetengetriebe ist aus einem Hohlrad und zumindest zwei Getriebestufen zusammengesetzt. Jede Getriebestufe ist als Modul ausgeführt und umfasst ein Sonnenrad, zumindest ein mit dem Sonnenrad und dem Hohlrad kämmendes Planetenrad, sowie einen Planetenträger. Das zumindest eine Planetenrad ist an beiden gegenüberliegenden Stirnseiten im Planetenträger radial abgestützt. Aufeinanderfolgende Getriebestufen sind jeweils über das Sonnenrad der einen Getriebestufe und den Planetenträger der anderen Getriebestufe miteinander gekoppelt. Dabei umfasst das Sonnenrad ein Kupplungselement, das in eine Kupplungsausnehmung des Planetenträgers der jeweils anderen Getriebestufe derart eingreift, dass Sonnenrad und Planetenträger drehfest miteinander verbunden sind.

Die Vorteile eines Planetengetriebes sind seit langem bekannt. Gegenüber herkömmlichen Stirnradgetrieben bieten sie den Vorteil, dass die Last auf mehrere Planetenräder aufgeteilt wird. Mit Planetengetrieben können bei gleichzeitig sehr kompakter Bauweise sehr große Über- bzw. Untersetzungen realisiert werden. Bauartbedingt können hohe Momente übertragen werden, und das, bedingt durch die bereits angesprochene Lastaufteilung, bei einer hohen Lebensdauer. Mit einer der größten Vorteile von Planetengetrieben ist, das die Abtriebswelle koaxial zur Antriebswelle angeordnet ist. Planetengetriebe können daher äußerst vielfältig eingesetzt werden und kommen beispielsweise bei kompakten Akkuschraubern oder dergleichen zum Einsatz. Aus dem Stand der Technik sind mehrstufige Planetengetriebe bekannt, mit Hilfe derer sehr große Übersetzungsverhältnisse möglich werden. Dabei ist es insbesondere bekannt, mehrstufige Planetengetriebe modulartig aufzubauen, wobei jedes Modul eine Getriebestufe darstellt. Aus DE 10251499 A1 ist beispielsweise ein modulares, mehrstufig ausbaubares Planetengetriebe mit zumindest zwei Getriebestufen bekannt. Jede Getriebestufe umfasst ein Hohlrad mit einer Innenverzahnung, ein koaxial dazu angeordnetes Sonnenrad mit einer Außenverzahnung sowie drei gleichmäßig über den Umfang der Getriebestufe verteilte Planetenräder, deren Verzahnung sowohl mit dem Hohlrad als auch dem Sonnenrad kämmt. Die Planetenräder sind einseitig über jeweils eine Achse in einem Planetenträger radial abgestützt. Die einseitige Abstützung bringt gewisse Nachteile mit sich. So müssen beispielsweise die zur Abstützung verwendeten Achsen genauso wie die Planetenträgerscheibe relativ groß dimensioniert werden, um die wirkenden Lasten aufnehmen zu können. Die einseitige Abstützung birgt zudem die Gefahr, dass das Tragbild durch einseitigen Verschleiß unregelmäßig ist. Insgesamt führt die einseitige Abstützung zu einem relativ hohen Verschleiß.

Aus der gattungsbildenden DE 202007003419 U1 ist ein modular aufgebautes Planetengetriebe der eingangs genannten Art bekannt, bei dem die Planetenräder einer Stufe beidseitig im Planetenträger abgestützt sind. Der Planetenträger ist dazu aus zwei Bauteilen zusammengesetzt. Das eine Bauteil ist ein massiver Zylinderblock, der auf der einen Seite Ausnehmungen für die Planetenräder aufweist. Die andere Seite ist geschlossen bzw. umfasst pro Ausnehmung eine Bohrung zur Lagerung der Planetenradachse. Das zweite Bauteil des Planetenträgers ist eine Planetenträgerscheibe, die auf die Seite des Zylinderblocks mit den Aussparungen aufgesetzt wird. Die beiden Bauteile sind miteinander verschraubt. Auch die Planetenträgerscheibe umfasst Bohrungen, die zur Lagerung der Planetenräderachsen dienen. Zwei aufeinanderfolgende Getriebestufen sind untereinander gekoppelt, indem ein Kupplungselement des Sonnenrads der einen Getriebestufe in eine Nut des Planetenträgers der jeweils anderen Stufe eingreift. Das Sonnenrad der einen Stufe ist somit drehfest mit dem Planetenträger der jeweils anderen Stufe verbunden.

Der Planetenträger des aus DE 202007003419 U1 bekannten Planetengetriebes ist aus Kunststoff gefertigt und kann daher lediglich Lasten bis zu einer bestimmten Höhe aufnehmen. Die durch die Ausnehmungen des Planetenträgers bedingte komplizierte Formgebung hingegen erschwert eine wirtschaftliche Fertigung des Planetenträgers aus belastbareren Werkstoffen, wie beispielsweise Metall. Zudem müssen die Nuten der Planetenträger zur Aufnahme der Kupplungselemente der jeweils angrenzenden Getriebestufen genau an diese Kupplungselemente angepasst werden.

Aufgabe der vorliegenden Erfindung ist es daher, ein modular aufgebautes Planetengetriebe der eingangs genannten Art anzugeben, das einen äußerst flexiblen Aufbau erlaubt, wobei gleichzeitig eine optimale radiale Abstützung der Planetenräder gegeben sein soll. Zudem soll eine sehr kompakte Bauweise erzielt werden. Auch sollen die verwendeten Bauteile einfach und kostengünstig zu fertigen sein.

Die Aufgabe wird gelöst durch die Merkmale des unabhängigen Anspruchs 1. Demnach liegt bei einem Planetengetriebe der eingangs genannten Art eine erfindungsgemäße Lösung vor, wenn der Planetenträger zumindest einer Getriebestufe, welche über diesen Planetenträger mit dem Sonnenrad einer weiteren Getriebestufe gekoppelt ist, eine erste Planetenträgerscheibe, eine zweite Planetenträgerscheibe und eine dritte Planetenträgerscheibe umfasst, wobei die erste Planetenträgerscheibe axial gesehen vor dem Planetenrad der Getriebestufe, und die zweite Planetenträgerscheibe axial gesehen hinter dem Planetenrad der Getriebestufe angeordnet ist, und wobei die Kupplungsausnehmung des Planetenträgers in der dritten Planetenträgerscheibe ausgebildet ist.

Die erfindungsgemäße Lösung bietet den Vorteil, dass, sofern ein Getriebestufenmodul mit unterschiedlichen Getriebestufenmodulen gekoppelt werden soll, nicht jeweils ein völlig unterschiedlicher Planetenträger zum Einsatz kommen muss, sondern lediglich eine passende dritte Planetenträgerscheibe gewählt werden kann. Die Montage des erfindungsgemäßen Planetengetriebes gestaltet sich daher gegenüber der Montage aus dem Stand der Technik bekannter Planetengetriebe äußerst einfach und flexibel. Ein weiterer Vorteil ist, dass erste und zweite Planetenträgerscheibe baugleich ausgeführt sein können. Die Fertigung gestaltet sich daher einfach und kostengünstig. Erste und zweite Planetenträgerscheibe können beispielsweise durch ein einfaches Umformungs- und/oder spanloses Trennverfahren aus einem Blech hergestellt werden. Auch eine kostengünstige Herstellung aus einem Sintermaterial ist möglich. Die erfindungsgemäße Lösung bietet zudem eine einfach Möglichkeit, die Planetenräder optimal im Planetenträger radial abzustützen. Da die Planetenträgerscheiben bei der erfindungsgemäßen Lösung sehr dünn ausgeführt werden können, ergibt sich bei einem erfindungsgemäßen Planetengetriebe auch eine sehr kompakte Bauweise. Gegenüber herkömmlichen Planetengetrieben mit einseitiger Planetenradabstützung kann neben der Baulängenreduzierung auch eine Gewichtsreduzierung erzielt werden.

Vorteilhafte Ausgestaltungen der vorliegenden Erfindung sind Gegenstand der Unteransprüche.

Der erfindungsgemäße Aufbau des Planetenträgers mit drei Planetenträgerscheiben kann in jeder Getriebestufe zum Einsatz kommen. Allerdings kann in der Abgangsstufe des Planetengetriebes eine dritte Planetenträgerscheibe vorgesehen sein, die anstatt einer Kupplungsausnehmung eine Bohrung für die Abtriebswelle des Planetengetriebes aufweist. Auch kann vorgesehen sein, dass der Planetenträger der Abgangsstufe lediglich zwei Planetenträgerscheiben umfasst. In diesem Fall ist die Antriebswelle mit der ersten und/oder der zweiten Planetenträgerscheibe verbunden.

In einer besonders bevorzugten Ausführungsform der vorliegenden Erfindung ist zur radialen Abstützung des Planetenrads ein Bolzen vorgesehen, der durch Bohrungen in erster, zweiter und dritter Planetenträgerscheibe sowie durch eine Bohrung im Planetenrad geführt ist. Der Bolzen stellt eine einfach Möglichkeit dar, sowohl das zugehörige Planetenrad radial abzustützen als auch die drei Planetenträgerscheiben des Planetenträgers miteinander zu verbinden. Um den Planetenträgerverbund zu verstärken, kann vorgesehen sein, dass zwischen dem Bolzen und den drei Planetenträgerscheiben jeweils eine Presspassung besteht. Zwischen Bolzen und Planetenrad hingegen muss dann eine Spielpassung vorgesehen sein, damit das Planetenrad auf dem Bolzen gleitgelagert ist. Üblicherweise umfasst eine Getriebestufe 3 oder mehr Planetenräder, die gleichmäßig über den Umfang der Getriebestufen verteilt im Planetenträger angeordnet sind.

In einer weiteren besonders bevorzugten Ausführungsform der vorliegenden Erfindung umfasst das Sonnenrad zwei Wellenstummel, die in erster und zweiter Planetenträgerscheibe drehbar gelagert sind, wobei einer der beiden Wellenstummel das Kupplungselement umfasst. Dadurch kann auch das Sonnenrad auf äußerst einfache Art und Weise beidseitig im Planetenträger gelagert werden. Die dritte Planetenträgerscheibe ist von der der Lagerung des Sonnenrads nicht betroffen, wodurch die dritte Planetenträgerscheibe sozusagen als Adapter zur Kopplung der jeweiligen Getriebestufe mit weiteren Getriebestufen ausgetauscht werden kann ohne die Lagerung des Sonnenrads zu beeinflussen. Das Kupplungselement wird vorzugsweise auf einen der beiden Wellenstummel aufgepresst. Alternativ dazu ist es auch möglich, das Kupplungselement beispielsweise auf den Wellenstummel zu schweißen oder mit dem Wellenstummel zu verkleben. Auch eine Kombination aus einer formschlüssigen Verbindung zwischen Kupplungselement und Wellenstummel und einer stoffschlüssigen Verbindung ist möglich.

In einer besonders bevorzugten Ausführungsform der vorliegenden Erfindung weist das Kupplungselement mehrere gleichmäßig über den Umfang verteilte Zähne auf, welche in entsprechende keilförmige Nuten der Kupplungsausnehmung eingreifen. Dadurch wird auf einfache Weise ein Formschluss zwischen Kupplungselement und Kupplungsausnehmung erreicht. Alternativ können das Kupplungselement und die Kupplungsausnehmung auch andere Formen, wie beispielsweise eine Vieleckform oder eine Sternform aufweisen.

In einer weiteren besonders bevorzugten Ausführungsform der vorliegenden Erfindung ist das Hohlrad des Planetengetriebes aus Hohlradsegmenten zusammengesetzt, wobei jeder Getriebestufe ein Hohlradsegment zugeordnet ist. Dadurch wird zum einen die Flexibilität bei der Getriebestufenauslegung erhöht und zum anderen die Modulbauweise und die damit einhergehende Montagevereinfachung forciert. Die Getriebestufen können mitsamt Hohlradsegment vorkonfektioniert werden, wodurch zum Aufbau eines individuellen mehrstufigen Planetengetriebes lediglich geeignete Getriebestufenmodule aus einer Auswahl selektiert und anschließend zusammengesetzt werden müssen. Dadurch, dass jede Getriebestufe ein eigenes Hohlradsegment umfasst, kann die Innenverzahnung des Hohlradsegments frei an die Dimensionierung der jeweiligen Getriebestufe angepasst werden. Die einzelnen Hohlradsegmente des fertigen Planetengetriebes können demnach unterschiedliche Zähnezahlen sowie unterschiedliche Arbeitsdurchmesser aufweisen.

Vorzugsweise weisen die Hohlradsegmente dabei einen einheitlichen Außendurchmesser auf. Dadurch kann aus den Hohlradsegmenten der aneinandergereihten Getriebestufen ein Getriebegehäuse mit einheitlichem Außendurchmesser aufgebaut werden.

Vorzugsweise sind die Hohlradsegmente der aneinandergereihten Getriebestufen miteinander verschweißt. Dadurch wird ein fester Verbund zwischen den Hohlradsegmenten erzielt und eine Verdrehung der Hohlradsegmente gegeneinander unterbunden. Alternativ ist zwischen den Hohlradsegmenten auch jeweils eine Pressverbindung möglich. Auch ein Formschluss zwischen den Hohlradsegmenten ist zusätzlich oder alternativ zur Verschweißung denkbar.

In einer besonders bevorzugten Ausführungsform der vorliegenden Erfindung umfasst das Planetengetriebe ein Gehäuse, in dem die Hohlradsegmente gemeinsam angeordnet sind. Das Gehäuse kann vorzugsweise z.B. durch eine Hülse gebildet werden, die die Hohlradsegmente umgibt. Je nach gewünschtem Aufbau bzw. ausgewählten Getriebestufen kann das Gehäuse aus einer Reihe von Hülsen mit unterschiedlichem Durchmesser und unterschiedlicher Länge ausgewählt werden.

In einer weiteren bevorzugten Ausführungsform der vorliegenden Erfindung ist zwischen zumindest einer der äußeren Planetenträgerscheiben jeweils am axialen Ende des Planetengetriebes und einem feststehenden Teil des Planetengetriebes ein Wälzlager oder Gleitlager zur Lagerung der Planetenträgerscheibe angeordnet. Dadurch wird ein Spiel der betroffenen Planetenträgerscheibe in radialer Richtung minimiert. Dies gewährleistet einen leisen und ruhigen Lauf des Planetengetriebes.

In einer weiteren bevorzugten Ausführungsform der vorliegenden Erfindung ist das Sonnenrad der Abgangsstufe des Planetengetriebes mittels eines Gleitlagers im zugehörigen Planetenträger gelagert. Hierdurch wird ebenfalls die Laufruhe des Getriebes optimiert.

In einer weiteren besonders bevorzugten Ausführungsform der vorliegenden Erfindung sind die Planetenträgerscheiben aus einem Sintermaterial gefertigt. Damit lassen sich die Planetenträgerscheiben auf äußerst einfache und kostengünstige Art und Weise sehr genau fertigen. Die erzielbare Fertigungsgenauigkeit trägt ebenfalls zu einem ruhigen Getriebelauf bei und verhindert Verkantungen oder dergleichen, wodurch insgesamt die Reibungsverluste im Planetengetriebe sehr gering gehalten werden können.

Ein bevorzugtes Ausführungsbeispiel der vorliegenden Erfindung wird im Folgenden anhand von Zeichnungen näher erläutert.

Es zeigen:
- **Fig. 1**: ein erfindungsgemäßes Planetengetriebe im Längsschnitt,
- **Fig. 2**: das Planetengetriebe aus Fig. 1 in einer längs geschnittenen Schrägansicht,
- **Fig. 3**: die Ansicht aus Fig. 2 in einem anderen Blickwinkel,
- **Fig. 4**: eine Explosionsschrägansicht des erfindungsgemäßen Planetengetriebes aus den Fig. 1 bis 3,
- **Fig. 5**: eine Detailschrägansicht der ersten Getriebestufe des erfindungsgemäßen Planetengetriebes aus den Fig. 1 bis 4,
- **Fig. 6**: die Getriebestufe aus Fig. 5 betrachtet von der anderen Seite,
- **Fig. 7**: eine Explosionsschrägansicht der Getriebestufe aus den Fig. 5 und 6,
- **Fig. 8**: eine Detailansicht der dritten Planetenträgerscheibe der ersten Getriebestufe des erfindungsgemäßen Planetengetriebes aus den Fig. 1 bis 7 im Zusammenspiel mit einem passenden Kupplungselement, und
- **Fig. 9**: die Planetenträgerscheibe aus Fig. 8 mit einem alternativ einsetzbaren Kupplungselement.

Für die folgenden Ausführungen gilt, dass gleiche Teile mit gleichen Bezugszeichen bezeichnet werden.

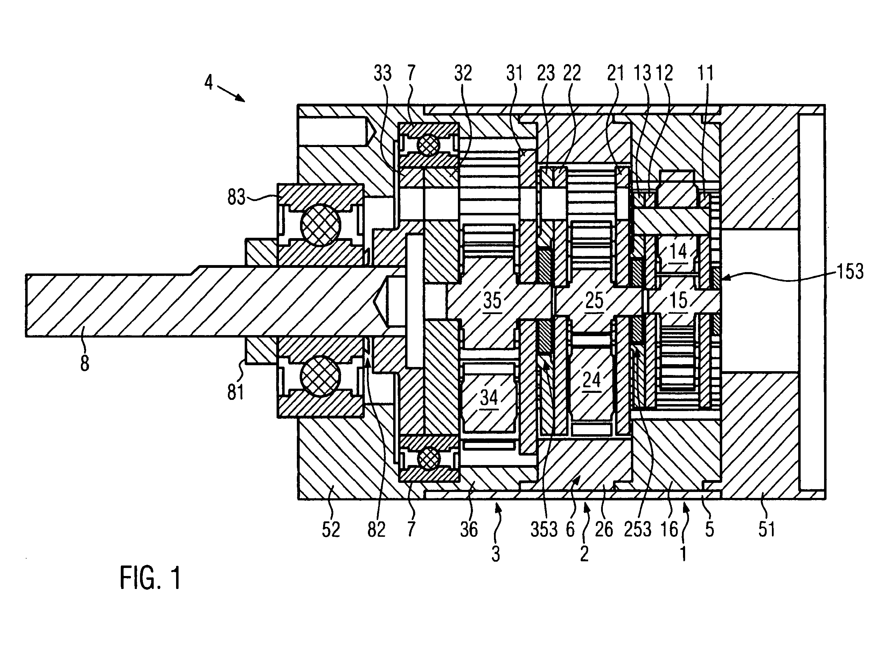

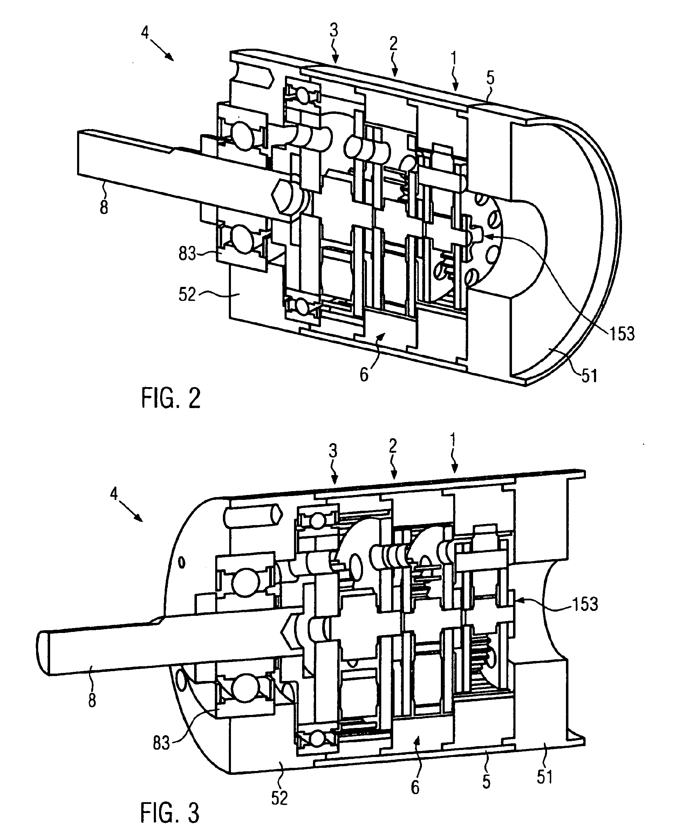

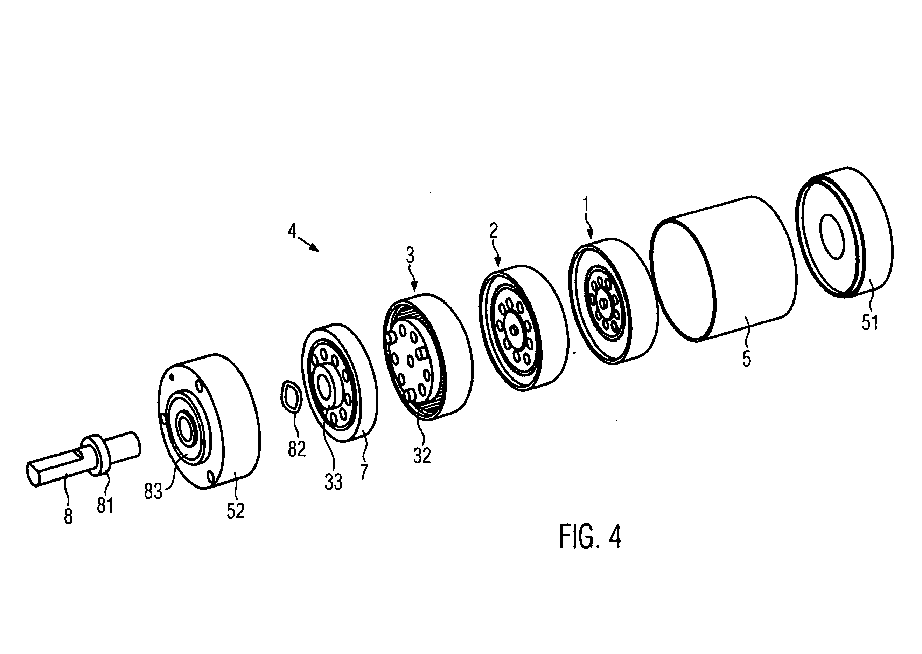

Die Figuren 1 bis 4 zeigen verschiedene Ansichten eines erfindungsgemäßen Planetengetriebes 4, das modular aufgebaut ist. Das Planetengetriebe 4 umfasst drei Getriebestufen, die als eigenständige Module 1, 2 und 3 ausgeführt sind. Die drei Getriebestufen 1, 2 und 3 sind in einem gemeinsamen Gehäuse 5 untergebracht, das antriebsseitig durch einen Motorflansch 51 und abtriebsseitig durch einen Getriebedeckel 52 abgeschlossen ist. Die dritte bzw. letzte Getriebestufe 3 treibt die Abtriebswelle 8 des Planetengetriebes 4 an, die mittels eines Kugellagers 83 im Getriebedeckel 52 drehbar gelagert ist. Die Abtriebswelle 8 ist in axialer Richtung durch einen am Kugellager 83 anliegenden Anschlagring 81 und einen auf der anderen Seite des Kugellagers 83 anliegenden Federring 82 gesichert.

Die Getriebestufen 1, 2 und 3 umfassen jeweils ein Hohlradsegment, ein koaxial zum Hohlradsegment angeordnetes Sonnenrad sowie drei gleichmäßige in Umfangsrichtung der Getriebestufe angeordnete Planetenräder, die durch einen Planetenträger gehalten werden. Die Verzahnung der Planetenräder einer Getriebestufe kämmt dabei sowohl mit der Verzahnung des zugehörigen Hohlradsegments als auch mit der Verzahnung des zugehörigen Stufensonnenrads. Das Hohlradsegment der ersten Getriebestufe ist mit dem Bezugszeichen 16 bezeichnet. Von den insgesamt drei Planetenrädern 14 der ersten Getriebestufe ist in Fig. 1 ein Planetenrad geschnitten dargestellt.

Die Planetenräder sind radial in einem Planetenträger abgestützt, der aus einer ersten Planetenträgerscheibe 11, einer zweiten Planetenträgerscheibe 12 sowie einer dritten Planetenträgerscheibe 13 zusammengesetzt ist. Die Planetenträgerscheiben der zweiten und dritten Getriebestufe sind analog mit den Bezugszeichen 21, 22 und 23 bzw. 31, 32 und 33 bezeichnet. Der Aufbau des Planetenträgers ist in allen drei Stufen prinzipiell gleich, wobei die Planetenträgerscheiben 32 und 33 der dritten Getriebestufe leicht anders ausgeführt sind als die entsprechenden Planetenträgerscheiben der ersten beiden Stufen. Hierauf wird später noch eingegangen.

Wie insbesondere in Fig. 1 dargestellt ist, sind die erste Planetenträgerscheibe 11 und die zweite Planetenträgerscheibe 12 der ersten Getriebestufe in axialer Richtung gesehen unmittelbar vor bzw. hinter den Planetenrädern 14 angeordnet. Die dritte Planetenträgerscheibe 13 bildet die Schnittstelle zur nächsten Getriebestufe 2 und liegt an der zweiten Planetenträgerscheibe 12 an.

Das Sonnenrad 15 der ersten Getriebestufe ist in der ersten Planetenträgerscheibe 11 und in der zweiten Planetenträgerscheibe 12 drehbar gelagert und drehfest mit dem Kupplungselement 153 verbunden. Das Kupplungselement 153 ist auf einen Wellenstummel des Sonnenrads 15 aufgepresst. Es bildet die Schnittstelle zu einer, an das erfindungsgemäße Planetengetriebe 4 ansetzbaren Antriebswelle. Das Sonnenrad 25 der zweiten Getriebestufe ist über einen Wellenstummel in analoger Art und Weise ebenfalls mit einem Kupplungselement 253 verbunden, das in eine entsprechende Ausnehmung der dritten Planetenträgerscheibe 13 der ersten Getriebestufe 1 eingreift. Der Planetenträger der ersten Getriebestufe 1 ist daher drehfest mit dem Sonnenrad 25 der zweiten Getriebestufe 2 verbunden, sodass sich das Sonnenrad 25 der Getriebestufe 2 mit dem Planetenträger der ersten Getriebestufe mitdreht.

Die Sonnenräder 24 der zweiten Getriebestufe 2 kämmen sowohl mit dem Sonnenrad 25 als auch dem Hohlradsegment 26 der zweiten Getriebestufe. Das Sonnenrad 35 der dritten Getriebestufe 3 wiederum ist über ein Kupplungselement 353 drehfest mit der dritten Planetenträgerscheibe 23 des Planetenträgers der zweiten Getriebestufe 2 verbunden.

Die dritte Getriebestufe 3 ist prinzipiell genauso aufgebaut wie die ersten beiden Getriebestufen 1 und 2. Das bedeutet, das Sonnenrad 35 der dritten Getriebestufe ist ebenfalls über Wellenstummel sowohl in der ersten Planetenträgerscheibe 31 als auch in der zweiten Planetenträgerscheibe 33 drehbar gelagert. Es steht in Eingriff mit den drei Planetenrädern 34 der dritten Getriebestufe, die wiederum mit dem Hohlradsegment 36 kämmen.

Die zweite Planetenträgerscheibe 32 und die dritte Planetenträgerscheibe 33 der dritten Getriebestufe 3 sind etwas stabiler ausgeführt als die entsprechenden Planetenträgerscheiben der ersten beiden Getriebestufen 1 und 2. Sie sind über ein Kugellager 7 drehbar im Gehäusedeckel 52 bzw. Hohlradsegment 36 bzw. in dem Gehäuse des Planetengetriebes gelagert. Die dritte Planetenträgerscheibe 33 der dritten Getriebestufe 3 umfasst anders als die dritten Planetenträgerscheiben der ersten beiden Getriebestufen 1 und 2 keine Ausnehmung zur Aufnahme eines Kupplungselements. Stattdessen ist in eine Bohrung der dritten Planetenträgerscheibe 33 der dritten Getriebestufe 3 die Abtriebswelle 8 des Planetengetriebes 4 eingepresst.

Wie der Fig. 1 unschwer entnommen werden kann, sind die drei Getriebestufen 1, 2 und 3 unterschiedlich dimensioniert. D.h., sowohl Sonnenrad als auch Planetenräder, Planetenträgerscheiben sowie das mit dem Sonnenrad verbundene Kupplungselement der schneller laufenden Getriebestufen sind kleiner dimensioniert als die entsprechenden Bauteile der langsamer laufenden Getriebestufen. Daher haben auch die Hohlradsegmente 16, 26 und 36 der drei Getriebestufen unterschiedliche Arbeitsdurchmesser. Der mittlere Durchmesser der Verzahnung dieser Hohlradsegmente ist somit bei der ersten Getriebestufe 1 am geringsten. Die Außendurchmesser der drei Hohlradsegmente 16, 26 und 36 sind jedoch einheitlich, wodurch es möglich ist, die Hohlradsegmente in eine Gehäusehülse 5 mit konstantem Innendurchmesser einzusetzen. Die drei Hohlradsegmente 16, 26 und 36 bilden zusammen das Hohlrad 6 des Planetengetriebes 4. Sie weisen unterschiedliche Verzahnungen mit unterschiedlicher Zähnezahl und unterschiedlichem Arbeitsdurchmesser auf. Die drei Hohlradsegmente 16, 26 und 36 sind formschlüssig miteinander verbunden, indem jeweils ein hülsenförmiger Vorsprung eines vorangehenden Hohlradsegments in einen stufenförmigen Absatz des jeweils nachfolgenden Hohlradsegments eingreift.

Prinzipiell wäre es möglich, das in den Figuren 1 bis 4 abgebildete Planetengetriebe 4 um eine weitere Getriebestufe zu erweitern. Diese weitere Getriebestufe könnte beispielsweise anstatt des gezeigten Motorflanschs 51 an die erste Getriebestufe 1 angesetzt werden. Darüber hinaus wäre es zudem möglich, nochmals weitere Getriebestufen an das Getriebe anzusetzen.

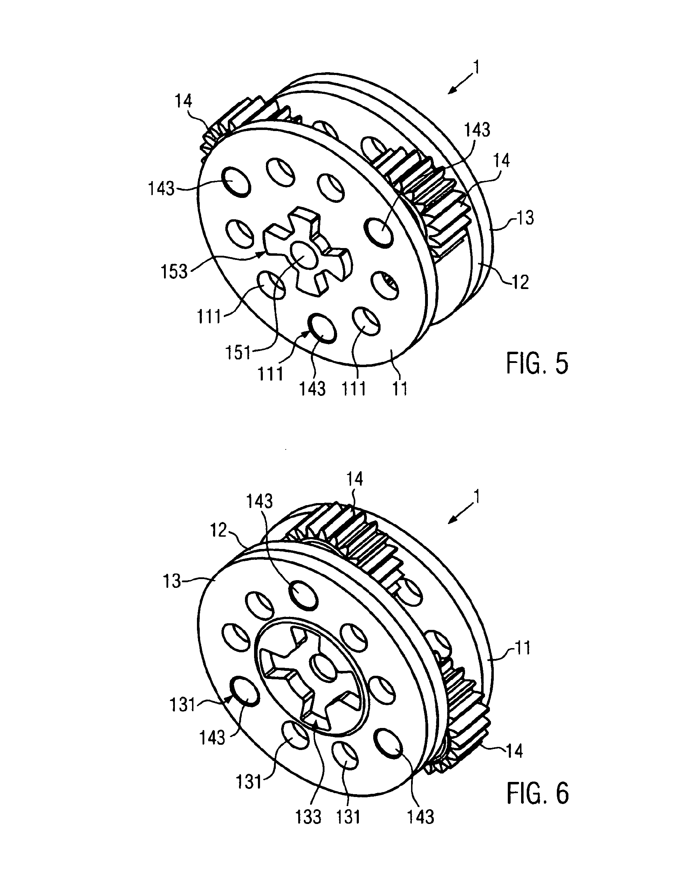

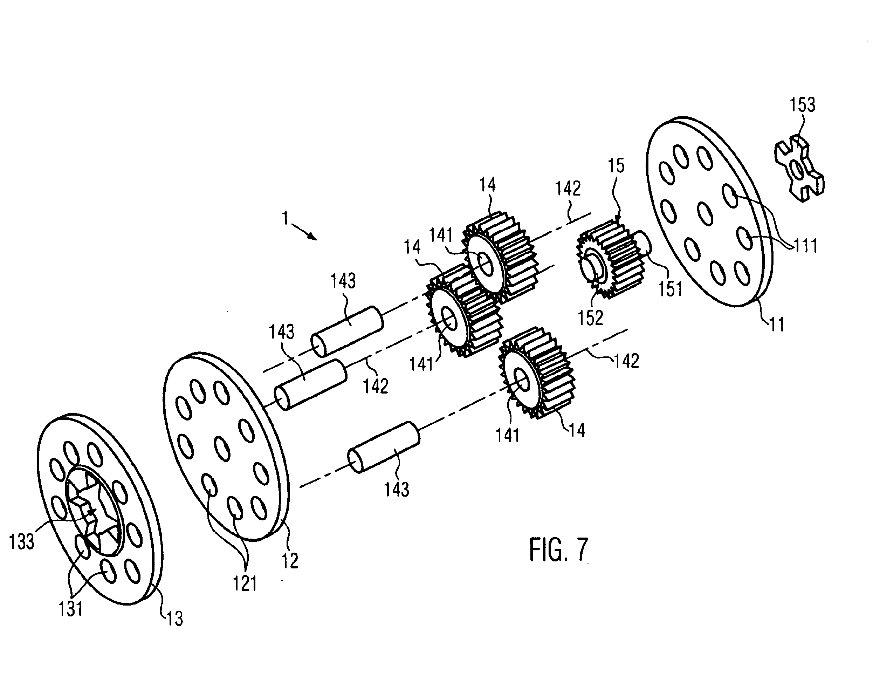

Der genaue Aufbau einer Getriebestufe ist in den Fig. 5 bis 7 exemplarisch am Beispiel der ersten Getriebestufe 1 dargestellt, wobei das zugehörige Hohlradsegment 16 nicht dargestellt ist. Wie bereits oben geschildert, ist der Planetenträger der ersten Getriebestufe 1 aus den drei Planetenträgerscheiben 11, 12 und 13 zusammengesetzt. Die erste Planetenträgerscheibe 11 und die zweite Planetenträgerscheibe 12 sind baugleich ausgeführt. Zwischen Ihnen sind die Planetenräder 14 sowie das Sonnenrad 15 angeordnet. Wie aus Fig. 7 hervorgeht, umfasst das Sonnenrad 15 einen ersten Wellenstummel 151 sowie, auf der gegenüberliegenden Seite, einen zweiten Wellenstummel 152. Der erste Wellenstummel 151 ist in einer entsprechenden zentralen Bohrung der ersten Planetenträgerscheibe 11 gleitend drehbar gelagert. Der zweite Wellenstummel 152 ist analog in einer entsprechenden Bohrung der zweiten Planetenträgerscheibe 12 gelagert. Wie insbesondere in Fig. 5 zu erkennen ist, ragt der erste Wellenstummel 151 im fertig montierten Zustand aus der ersten Planetenträgerscheibe 11 heraus. Auf ihn ist das Kupplungselement 153 aufgepresst.

Auf der gegenüberliegenden Seite der Getriebestufe weist die dritte Planetenträgerscheibe 13 eine Kupplungsausnehmung 133 auf, in die ein entsprechendes Kupplungselement einer angesetzten Getriebestufe eingreifen kann.

Alle drei Planetenträgerscheiben 11, 12 und 13 umfassen jeweils mehrere Bohrungen 111 bzw. 121 bzw. 131. Von den insgesamt neun Bohrungen jeder Planetenträgerscheibe sind jeweils drei auf einem Durchmesserkreis angeordnet. Diese drei Bohrungen sind in Umfangsrichtung gleichmäßig verteilt, so dass zwischen zwei Bohrungen jeweils ein Winkel von 120° besteht. Von den insgesamt neun Bohrungen werden jeweils nur drei auf einem konstanten Durchmesserkreis verwendet. Aufgrund der weiteren Bohrungen lassen sich ein und dieselben Planetenträgerscheiben für unterschiedlich dimensionierte Getriebestufen verwenden.

In jede verwendete Bohrung ist jeweils ein Bolzen 143 eingepresst, der über die gesamte axiale Länge der Getriebestufe reicht uns somit die drei Planetenträgerscheiben 11, 12 und 13 drehfest miteinander verbindet. Zwischen der ersten Planetenträgerscheibe 11 und der zweiten Planetenträgerscheibe 12 ist auf jedem der drei Bolzen 143 jeweils ein Planetenrad 141 drehbar gelagert. Jedes Planetenrad 14 weist dazu eine Bohrung 141 auf. Zwischen dem zugehörigen Bolzen 143 und der Bohrung 141 herrscht eine Spielpassung, sodass das Planetenrad 14 gleitend auf dem Bolzen 143 gelagert ist. Bei der Bohrung 141 in dem Planetenrad 14 handelt es sich um eine zentrale Bohrung, wodurch die Achse 142 des Bolzens 143 zugleich der Drehachse des Planetenrads 14 entspricht.

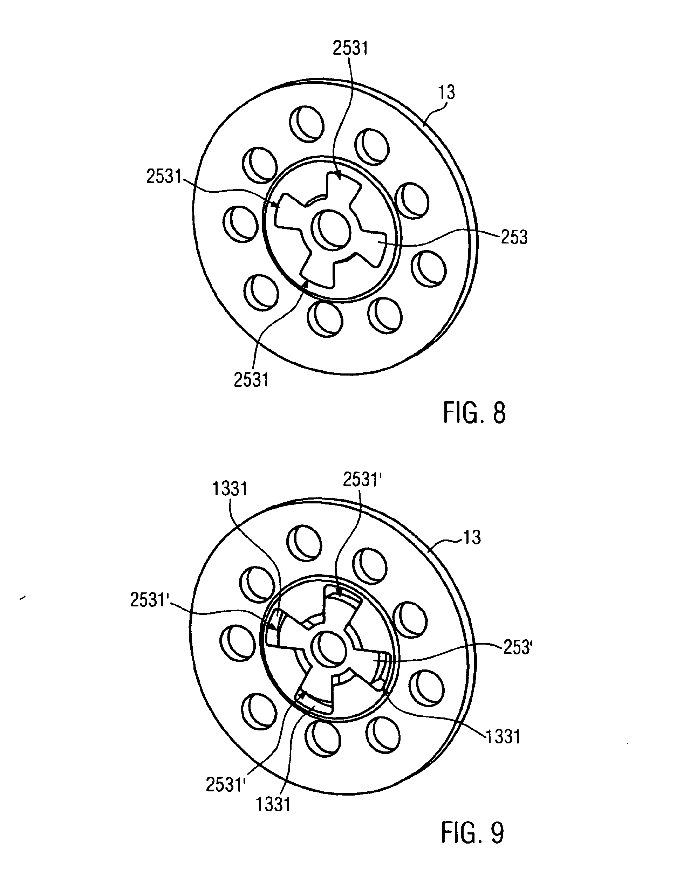

Die Fig. 8 zeigt eine Detailansicht der dritten Planetenträgerscheibe 13 der ersten Getriebestufe 1. In die bereits in Fig. 6 dargestellte Kupplungsausnehmung 133 ist das Kupplungselement 253 der zweiten Getriebestufe eingesetzt. Das Kupplungselement 253 umfasst vier gleichmäßig über den Umfang verteilte Zähne 2531, die in entsprechende keilförmige Nuten der Kupplungsausnehmung eingreifen. Diese keilförmigen Nuten sind in Fig. 9 mit dem Bezugszeichen 1331 bezeichnet. Die Außenkontur des Kupplungselements 253 entspricht exakt der Innenkontur der Kupplungsausnehmung in der dritten Planetenträgerscheibe 13.

In Fig. 9 ist dargestellt, dass die Planetenträgerscheibe 13 auch kompatibel zu kleiner dimensionierten Kupplungselementen ist. Das in Fig. 9 mit dem Bezugszeichen 253' bezeichnete Kupplungselement entspricht in seiner Dimension dem beispielsweise in Fig. 5 dargestellten Kupplungselement 153 der ersten Getriebestufe. Es wäre daher auch möglich, zwei baugleiche Getriebestufen, die in ihrem Aufbau und in ihren Abmessungen der in den Fig. 1 bis 7 gezeigten ersten Getriebestufe entsprechen, aneinander zu koppeln ohne dazu das in Eingriff befindliche Kupplungselement bzw. die in Eingriff befindliche Planetenträgerscheibe auswechseln zu müssen. Wie der Fig. 9 entnommen werden kann, ist das Kupplungselement 253' generell etwas kleiner als das in Fig. 8 gezeigte Kupplungselement 253. D.h., die zentrale Hülse des Kupplungselements ist kleiner und die keilförmigen Zähne 2531' sind etwas kürzer als die Zähne 2531 des in Fig. 8 dargestellten Kupplungselements 253. Dennoch besteht zwischen den kleineren Zähnen 2531' und den keilförmigen Nuten 1331 der Kupplungsausnehmung der dritten Planetenträgerscheibe 13 ein Formschluss.

Anstatt der gezeigten Form können Kupplungselement und Kupplungsausnehmung auch andere Formen, wie beispielsweise eine Vieleckform oder eine Sternform aufweisen.

## Patentansprüche

1. Modular aufgebautes Planetengetriebe (4) mit einem Hohlrad (6) und zumindest zwei Getriebestufen (1, 2, 3),
wobei jede Getriebestufe (1, 2, 3) als Modul ausgeführt ist und ein Sonnenrad (15, 25, 35), zumindest ein mit dem Sonnenrad (15, 25, 35) und dem Hohlrad (6) kämmendes Planetenrad (14, 24, 34), sowie einen Planetenträger umfasst,
wobei ferner das zumindest eine Planetenrad (14, 24, 34) an beiden gegenüberliegenden Stirnseiten im Planetenträger radial abgestützt ist,
und wobei aufeinanderfolgende Getriebestufen (1, 2, 3) jeweils über das Sonnenrad (15, 25, 35) der einen Getriebestufe (1, 2, 3) und den Planetenträger der anderen Getriebestufe (1, 2, 3) miteinander gekoppelt sind, wobei das Sonnenrad (15, 25, 35) ein Kupplungselement (153, 253, 353) umfasst, das in eine Kupplungsausnehmung (133) des Planetenträgers derart eingreift, dass Sonnenrad (15, 25, 35) und Planetenträger drehfest miteinander verbunden sind,
**dadurch gekennzeichnet, dass**
der Planetenträger zumindest einer Getriebestufe (1, 2), welche über diesen Planetenträger mit dem Sonnenrad einer weiteren Getriebestufe (2, 3) gekoppelt ist, eine erste Planetenträgerscheibe (11, 21, 31), eine zweite Planetenträgerscheibe (12, 22, 32) und eine dritte Planetenträgerscheibe (13, 23) umfasst, wobei die erste Planetenträgerscheibe (11, 21, 31) axial gesehen vor dem Planetenrad (14, 24, 34) der Getriebestufe (1, 2, 3), und die zweite Planetenträgerscheibe (12, 22, 32) axial gesehen hinter dem Planetenrad (14, 24, 34) der Getriebestufe (1, 2, 3) angeordnet ist, und wobei die Kupplungsausnehmung (133) des Planetenträgers in der dritten Planetenträgerscheibe (13, 23) ausgebildet ist.

2. Planetengetriebe nach Anspruch 1, **dadurch gekennzeichnet, dass** der Planetenträger derjenigen Getriebestufe (3), die eine Abgangsstufe des Planetengetriebes (4) bildet, eine erste Planetenträgerscheibe (31), eine zweite Planetenträgerscheibe (32) und eine dritte Planetenträgerscheibe (33) umfasst, wobei die erste Planetenträgerscheibe (31) axial gesehen vor dem Planetenrad (34) der Getriebestufe (3), und die zweite Planetenträgerscheibe (32) axial gesehen hinter dem Planetenrad (34) der Getriebestufe (3) angeordnet ist, und wobei die dritte Planetenträgerscheibe (33) eine Bohrung zur Aufnahme einer Abtriebswelle (8) des Planetengetriebes (4) umfasst.

3. Planetengetriebe (4) nach einem der Ansprüche 1 oder 2, **dadurch gekennzeichnet, dass** zur radialen Abstützung des Planetenrads (14, 24, 34) ein Bolzen (143) vorgesehen ist, der durch Bohrungen (111, 121, 131) in der ersten, zweiten und dritten Planetenträgerscheibe sowie durch eine Bohrung (141) im Planetenrad (14, 24, 34) geführt ist.

4. Planetengetriebe (4) nach einem der Ansprüche 1 bis 3, **dadurch gekennzeichnet, dass** das Sonnenrad (15, 25, 35) zwei Wellenstummel (151, 152) umfasst, die in erster und zweiter Planetenträgerscheibe drehbar gelagert sind, wobei einer der beiden Wellenstummel das Kupplungselement (153, 253, 353) umfasst.

5. Planetengetriebe (4) nach einem der Ansprüche 1 bis 4, **dadurch gekennzeichnet, dass** das Kupplungselement (153, 253, 353) mehrere gleichmäßig über den Umfang verteilte Zähne (2531, 2531') aufweißt, welche in entsprechende keilförmige Nuten (1331) der Kupplungsausnehmung (133) eingreifen.

6. Planetengetriebe (4) nach einem der Ansprüche 1 bis 5, **dadurch gekennzeichnet, dass** das Hohlrad (6) aus Hohlradsegmenten (16, 26, 36) zusammengesetzt ist, wobei jeder Getriebestufe (1, 2, 3) ein Hohlradsegment (16, 26, 36) zugeordnet ist.

7. Planetengetriebe (4) nach Anspruch 6, **dadurch gekennzeichnet, dass** die Hohlradsegmente (16, 26, 36) einen einheitlichen Außendurchmesser aufweisen.

8. Planetengetriebe (4) nach einem der Ansprüche 6 oder 7, **dadurch gekennzeichnet, dass** die Hohlradsegmente (16, 26, 36) miteinander verschweißt oder mittels Pressverbindung oder Formschluss miteinander verbunden sind.

9. Planetengetriebe (4) nach einem der Ansprüche 6 bis 8, **dadurch gekennzeichnet, dass** das Planetengetriebe (4) ein Gehäuse (5) umfasst, in dem die Hohlradsegmente (16, 26, 36) gemeinsam angeordnet sind.

10. Planetengetriebe (4) nach einem der Ansprüche 1 bis 9, **dadurch gekennzeichnet, dass** zwischen zumindest einer der äußeren Planetenträgerscheiben (32, 33) jeweils am axialen Ende des Planetengetriebes (4) und einem feststehenden Teil des Planetengetriebes (4) ein Wälzlager (83) oder Gleitlager zur Lagerung der Planetenträgerscheibe (32, 33) angeordnet ist.

11. Planetengetriebe (4) nach einem der Ansprüche 1 bis 10, **dadurch gekennzeichnet, dass** das Sonnenrad (15, 25, 35) der Abgangsstufe mittels eines Gleitlagers im zugehörigen Planetenträger gelagert ist.

12. Planetengetriebe (4) nach einem der Ansprüche 1 bis 11, **dadurch gekennzeichnet, dass** die Planetenträgerscheiben durch ein Umformungs- und/oder ein spanloses Trennverfahren gefertigt sind.

## Claims

1. A modular-construction epicyclic transmission (4) with an annulus (6) and at least two gear stages (1,2,3),
wherein each gear stage (1,2,3) is in the form of a module and comprises a sun gear (15,25,35), at least one planet pinion (14,24,34) meshing with the sun gear (15,25,35) and with the annulus (6), and also a planet carrier,
wherein further the at least one planet pinion (14,24,34) is supported radially at both opposite end faces in the planet carrier,
and wherein successive gear stages (1,2,3) are coupled to one another in each case via the sun gear (15,25,35) of one gear stage (1,2,3) and the planet carrier of the other gear stage (1,2,3), wherein the sun gear (15,25,35) comprises a coupling element (153,253,353) which engages in such a way into a coupling recess (133) of the planet carrier that the sun gear (15,25,35) and the planet carrier are connected to one another in a manner precluding relative rotation,
**characterised in that**
the planet carrier of at least one gear stage (1,2) which is coupled via this planet carrier to the sun gear of a further gear stage (2,3), comprises a first planet carrier disc (11,21,31), a second planet carrier disc (12,22,32) and a third planet carrier disc (13,23), wherein, viewed axially, the first planet carrier disc (11,21,31) is arranged in front of the planet pinion (14,24,34) of the gear stage (1,2,3) and, viewed axially, the second planet carrier disc (12,22,32) is arranged behind the planet pinion (14,24,34) of the gear stage (1,2,3), and wherein the coupling recess (133) of the planet carrier is formed in the third planet carrier disc (13,23).

2. An epicyclic transmission according to Claim 1, **characterised in that** the planet carrier of that gear stage (3) which forms an output stage of the epicyclic transmission (4) comprises a first planet carrier disc (31), a second planet carrier disc (32) and a third planet carrier disc (33), wherein, viewed axially, the first planet carrier disc (31) is arranged in front of the planet pinion (34) of the gear stage (3), and, viewed axially, the second planet carrier disc (32) is arranged behind the planet pinion (34) of the gear stage (3), and wherein the third planet carrier disc (33) comprises a bore for receiving a driven shaft (8) of the epicyclic transmission (4).

3. An epicyclic transmission (4) according to either of Claims 1 or 2, **characterised in that** for the radial support of the planet pinion (14,24,34) a pin (143) is provided, which is guided through bores (111,121,131) in the first, second and third planet carrier discs, and also through a bore (141) in the planet pinion (14,24,34).

4. An epicyclic transmission (4) according to any one of Claims 1 to 3, **characterised in that** the sun gear (15,25,35) comprises two shaft stubs (151,152) which are mounted rotatably in the first and second planet carrier discs, wherein one of the two shaft stubs comprises the coupling element (153,253,353).

5. An epicyclic transmission (4) according to any one of Claims 1 to 4, **characterised in that** the coupling element (153,253,353) has a plurality of teeth (2531,2531') which are uniformly spaced apart over the periphery and which engage in corresponding wedge-shaped grooves (1331) in the coupling recess (133).

6. An epicyclic transmission (4) according to any one of Claims 1 to 5, **characterised in that** the annulus (6) is composed of annulus segments (16,26,36), wherein one annulus segment (16,26,36) is assigned to each gear stage (1,2,3).

7. An epicyclic transmission (4) according to Claim 6, **characterised in that** the annulus segments (16,26,36) are of uniform outer diameter.

8. An epicyclic transmission (4) according to either of Claims 6 or 7, **characterised in that** the annulus segments (16,26,36) are welded together or are joined together by means of a press-fit joint or form-locking.

9. An epicyclic transmission (4) according to any one of Claims 6 to 8, **characterised in that** the epicyclic transmission (4) comprises a housing (5) in which the annulus segments (16,26,36) are arranged together.

10. An epicyclic transmission (4) according to any one of Claims 1 to 9, **characterised in that** a rolling bearing (83) or plain bearing for the bearing support of the planet carrier disc (32,33) is disposed between at least one of the outer planet carrier discs (32,33) in each case at the axial end of the epicyclic transmission (4) and a stationary part of the epicyclic transmission (4).

11. An epicyclic transmission (4) according to any one of Claims 1 to 10, **characterised in that** the sun gear (15,25,35) of the output stage is supported by means of a plain bearing in the associated planet carrier.

12. An epicyclic transmission (4) according to any one of Claims 1 to 11, **characterised in that** the planet carrier discs are produced by a forming and/or non-cutting separation process.

## Revendications

1. Train épicycloïdal de construction modulaire (4) comprenant une couronne (6) et au moins deux étages d'engrenages (1, 2, 3),
dans lequel chaque étage d'engrenages (1, 2, 3) est réalisé sous forme d'un module et comporte un soleil (15, 25, 35), au moins un satellite (14, 24, 34) qui s'engrène avec le soleil (15, 25, 35) et la couronne (6), ainsi qu'un porte-satellites,
dans lequel l'au moins un satellite (14, 24, 34) est supporté radialement sur ses deux côtés frontaux opposés dans le porte-satellites,
et dans lequel des étages d'engrenages successifs (1, 2, 3) sont chacun accouplés entre eux via le soleil (15, 25, 35) d'un étage d'engrenages (1, 2, 3) et le porte-satellites de l'autre étage d'engrenages (1, 2, 3), dans lequel le soleil (15, 25, 35) comporte un élément d'accouplement (153, 253, 353) qui s'engage dans un logement d'accouplement (133) du porte-satellites, de telle sorte que le soleil (15, 25, 35) et le porte-satellites sont connectés entre eux sans liberté de rotation,
**caractérisé**
**en ce que** le porte-satellites de au moins un étage d'engrenages (1, 2) qui est accouplé via ce porte-satellites au soleil d'un autre étage d'engrenages (2, 3), comporte un premier disque porte-satellites (11, 21, 31), un deuxième disque porte-satellites (12, 22, 32) et un troisième disque porte-satellites (13, 23), dans lequel le premier disque porte-satellites (11, 21, 31) est agencé devant le satellite (14, 24, 34) de l'étage d'engrenages (1, 2, 3) en vue axiale, et le deuxième disque porte-satellites (12, 22, 32) est agencé derrière le satellite (14, 24, 34) de l'étage d'engrenages (1, 2, 3) en vue axiale, et dans lequel le logement d'accouplement (133) du porte-satellites est constitué dans le troisième disque porte-satellites (13, 23).

2. Train épicycloïdal selon la revendication 1, **caractérisé en ce que** le porte-satellites dont l'étage d'engrenages (3) constitue un étage de sortie du train épicycloïdal (4) comporte un premier disque porte-satellites (31), un deuxième disque porte-satellites (32) et un troisième disque porte-satellites (33), dans lequel le premier disque porte-satellites (31) est agencé devant le satellite (34) de l'étage d'engrenages (3) en vue axiale et le deuxième disque porte-satellites (32) est agencé derrière le satellite (34) de l'étage d'engrenages (3) en vue axiale, et dans lequel le troisième disque porte-satellites (33) comporte un alésage pour recevoir un arbre de sortie (8) du train épicycloïdal (4).

3. Train épicycloïdal (4) selon l'une des revendications 1 ou 2, **caractérisé en ce qu'**un axe (143) est pourvu pour assurer le support axial du satellite (14, 24, 34) et passe à travers des alésages (111, 121, 131) dans les premier, deuxième et troisième disques porte-satellites, ainsi qu'à travers un alésage (141) dans le satellite (14, 24, 34).

4. Train épicycloïdal (4) selon l'une des revendications 1 à 3, **caractérisé en ce que** le soleil (15, 25, 35) comporte deux embouts d'axe (151, 152) qui sont montés de façon rotative dans les premier et deuxième disques porte-satellites, dans lequel l'un des deux embouts d'axe comporte l'élément d'accouplement (153, 253, 353).

5. Train épicycloïdal (4) selon l'une des revendications 1 à 4, **caractérisé en ce que** l'élément d'accouplement (153, 253, 353) comporte plusieurs dents (2531, 2531') réparties uniformément sur la périphérie, qui s'engagent dans des encoches cunéiformes correspondantes (1331) du logement d'accouplement (133).

6. Train épicycloïdal (4) selon l'une des revendications 1 à 5, **caractérisé en ce que** la couronne (6) est constituée de segments de couronne (16, 26, 36), dans lequel un segment de couronne (16, 26, 36) est associé à chaque étage d'engrenages (1, 2, 3).

7. Train épicycloïdal (4) selon la revendication 6, **caractérisé en ce que** les segments de couronne (16, 26, 36) présentent un même diamètre externe.

8. Train épicycloïdal (4) selon l'une des revendications 6 ou 7, **caractérisé en ce que** les segments de couronne (16, 26, 36) sont soudés entre eux ou reliés entre eux à l'aide d'une liaison par serrage ou par complémentarité de formes.

9. Train épicycloïdal (4) selon l'une des revendications 6 à 8, **caractérisé en ce que** le train épicycloïdal (4) comporte un boîtier (5) dans lequel les segments de couronne (16, 26, 36) sont agencés conjointement.

10. Train épicycloïdal (4) selon l'une des revendications 1 à 9, **caractérisé en ce qu'**un roulement mécanique (83) ou un palier lisse est agencé entre au moins un des disques porte-satellites externes (32, 33), chaque fois à l'extrémité axiale du train épicycloïdal (4), et une partie fixe du train épicycloïdal (4) pour le montage des disques porte-satellites (32, 33).

11. Train épicycloïdal (4) selon l'une des revendications 1 à 10, **caractérisé en ce que** le soleil (15, 25, 35) de l'étage de sortie est monté à l'aide d'un palier lisse dans le porte-satellites correspondant.

12. Train épicycloïdal (4) selon l'une des revendications 1 à 11, **caractérisé en ce que** les disques porte-satellites sont fabriqués selon un procédé de formage et/ou un procédé de découpe sans copeaux.
